(19) **Europäisches Patentamt / European Patent Office / Office européen des brevets**

(11) **EP 2 393 223 B1**

(12) **EUROPEAN PATENT SPECIFICATION**

(45) Date of publication and mention
of the grant of the patent:
**16.01.2013 Bulletin 2013/03**

(51) Int Cl.:
**H04B 10/07** (2013.01)

(21) Application number: **10010249.0**

(22) Date of filing: **23.09.2010**

(54) **In-band SNR measurement based on spectral correlation**

Inband-SNR-Messung auf Grundlage von spektraler Korrelation

Mesure de rapport signal bruit intrabande basée sur une corrélation spectrale

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **26.04.2010 EP 10004404**

(43) Date of publication of application:
**07.12.2011 Bulletin 2011/49**

(73) Proprietor: **JDSU Deutschland GmbH
72800 Eningen u.A. (DE)**

(72) Inventor: **Grupp, Wolfgang Dr.
72555 Metzingen (DE)**

(74) Representative: **Klocke, Peter
ABACUS Patentanwälte
Klocke Späth Barth
European Patent and Trademark Attorneys
Kappelstrasse 8
72160 Horb (DE)**

(56) References cited:
**EP-A1- 1 976 208 US-A1- 2002 176 129
US-B2- 7 283 744**

- **NICOLA DA DALT ET AL: "On the Jitter
Requirements of the Sampling Clock for Analog-
to-Digital Converters", IEEE TRANSACTIONS ON
CIRCUITS AND SYSTEMS PART I: REGULAR
PAPERS, IEEE SERVICE CENTER, NEW YORK,
NY, US, vol. 49, no. 9, 1 September 2002
(2002-09-01), XP011071341, ISSN: 1057-7122**
- **ONER ET AL: "Air interface identification for
Software Radio systems", AEU INTERNATIONAL
JOURNAL OF ELECTRONICS AND
COMMUNICATIONS, ELSEVIER, JENA, DE, vol.
61, no. 2, 8 January 2007 (2007-01-08), pages
104-117, XP005825399, ISSN: 1434-8411, DOI:
DOI:10.1016/J.AEUE.2006.03.005**

**Description**

Technical field of the invention

The present invention concerns a method and an apparatus for estimating the signal power and the noise power in a noisy optical or electrical transmission channel. The focus of the invention is on the in-service measurement of the in-band optical signal-to-noise ratio (in-band OSNR), however, the general concept is also applicable to electrical transmission systems.

Technical Background of the invention

Fault- and performance management in all optical communication systems requires reliable information about the optical signal quality. The in-band optical signal-to-noise ratio (OSNR) is a fundamental performance metric for Wavelength Division Multipexing (WDM) transmission systems [1], [2]. Measurement of the in-band SNR requires the separation of payload and noise components in a transmission signal, i.e. there must be some features that payload and noise do not have in common.

Today, the OSNR is usually measured with a high-resolution optical spectral analyzer, assuming that there are regions in the optical channel where the power spectral densities of payload and noise are not overlapping [3], [4]. This is no longer possible in systems with increased spectral efficiency, where the payload signal occupies the full channel bandwidth. Other methods (e.g. polarization nulling) are based on the assumption that the optical payload signal is polarized and the noise signal is unpolarized [5]. These methods are limited by polarization cross talk.

[1] C. Chan et al: Optical Performance Monitoring , Elsevier 2010
[2] ITU-T Rec. G.697: Optical monitoring for DWDM systems, Nov. 2009
[3] IEC 61280-2- Ed. 2.0: Fibre optic communication subsystem test procedures -Part 2-9: Digital systems - Optical signal-to noise ratio measurement for dense wavelength division multiplexed systems
[4] W. Moench, J. Larikova 'Measuring the Optical Signal-to-Noise Ratio in Agile Optical Networks', OFC 2007, NWC1
[5] M. Rasztovits-Wiech, M. Danner, W. R. Leeb, 'Optical signal-to-noise measurement in WDM networks using polarization extinction', ECOC 1998, Proc. 549
[6] Gardner, W.A., Franks, L.E.: Characterization of Cyclostationary Random Signal Processes. IEEE Transactions on Information Theory, Vol. IT-21, No.1, January 1975

US 7283744 discloses a method and apparatus for "Performance monitoring based on optical autocorrelation" with an optical performance monitor adapted to sample an intensity autocorrelation function corresponding to an optical signal transmitted in an optical network and based on the sampling, characterize two or more impairments concurrently present in the optical signal.

The OSNR estimate provided by this approach is strongly influenced by other optical impairments such as chromatic dispersion., which requires that these impairments have to be estimated simultaneously with the noise power. Since the estimates are solely based on signal metrics derived from the samples of the intensity autocorrelation of the noisy signal, there is no unambigous separation of signal and noise.

With increasing bit rate also the spectral bandwidth of the signal gains and exploits the available transmission channel bandwidth. Therefore the signal spectra in the spectral region cannot be separated from the background noise in the transmission channel. Thus, it is necessary to find a solution for differentiation of the signal power and noise power components.

Summary of the invention

The object of the present invention is to propose a new possibility for the in-service estimation of the signal-to noise ratio of a noisy transmission signal, which allows an estimation also in case that the signal power density and the noise power density do completely overlap and which is robust against signal impairments caused by filtering and dispersion.

This object is solved by a method and an apparatus as claimed in the independent method and apparatus claims. Further advantageous features are claimed in respective subclaims. The new method and the apparatus make use of the fact that synchronous data signals are wide-sense cyclostationary random processes while random noise is a wide-sense stationary process. Cyclostationarity is common to a broad class of synchronous data signals, regardless whether optical or electrical carriers are used.

According to the invention the method for estimating the signal power and the noise power in a noisy optical or electrical signal in a transmission system is performed by the following steps:

Synchronous sampling of the noisy electrical or optical signal synchronized with the symbol clock of the transmission system;

Determining a cyclic autocorrelation function (CACF) of the noisy optical or electrical signal:

Calculating a spectral correlation density function (SCDF) via 2D-Fourier Transform of the cyclic autocorrelation function (CACF);

Estimating a signal power (P) by extracting characteristic features of the spectral correlation density function (SCDF) and using a calibration factor which is dependent on the modulation format of the optical or electrical signal;

Estimating a noise power by subtracting the signal power (P) from a total power of the noisy electrical or optical signal;

Calculating the signal-to-noise ratio SNR=P/N.

Accordingly, the apparatus of the invention comprises means adapted to perform synchronous sampling with the symbol clock of the transmission system of the noisy optical or electrical signal; means adapted to perform determining of a cyclic autocorrelation function (CACF) of the noisy optical or electrical signal; means adapted to perform calculating of a spectral correlation density function (SCDF) via 2D-Fourier Transform of the cyclic autocorrelation function (CACF); means adapted to perform estimating of a signal power (P) by extracting characteristic features of the spectral correlation density function (SCDF) and using a calibration factor which is dependent on the modulation format of the optical or electrical signal; means adapted to perform estimating of a noise power by subtracting the signal power (P) from a total power of the noisy electrical or optical signal, and means adapted to perform calculating the signal-to noise ratio SNR=P/N.

According to a preferred embodiment, the method comprises automatic pattern recognition to identify the calibration factor if the modulation format of the signal x(t) is not known a-priori by processing characteristic features of the spectral correlation density function SCDF. The apparatus comprises means being adapted to perform a respective automatic pattern recognition as mentioned in the sentence before.

In an other preferred embodiment, the method comprises automatic pattern recognition to identify the presence other impairments of the signal x(t) such as Differential Group Delay, Chromatic Dispersion, etc., by processing characteristic features of the spectral correlation density function SCDF, in order to compensate the impact of these impairments on the signal-to-noise ratio SNR estimate. Respectively, the apparatus comprises means being adapted to perform automatic pattern recognition as mentioned in the sentence before.

Further the problem is solved by a use of automatic pattern recognition to identify the calibration factor if the modulation format of the signal x(t) is not known a-priori by processing characteristic features of a spectral correlation density function SCDF, e.g. ratio of the peak heights, shape of central peak and side lobes, etc..

Further the problem is solved by a use of automatic pattern recognition to identify the presence other impairments of the signal x(t) such as Differential Group Delay, Chromatic Dispersion, etc., by processing characteristic features of the SCDF, in order to compensate the impact of these impairments on a signal-to-noise ratio SNR estimate.

Brief description of the drawings

Other aspects, features, and benefits of the present invention will become more fully apparent from the following detailed description and the drawings, whereas single features may be realized alone or together with others in embodiments of the invention. The drawings show in

Fig. 1     an ensemble of sample functions of a typical wide sense stationary noise process;

Fig. 2.     an ideal binary random process;

Fig. 3     a Cyclic Autocorrelation Function $k_{xx}(t,\tau)$ of an ideal binary random process;

Fig. 4     the 2D-Fourier Transform of the pattern in Fig. 3 as a Spectral Correlation Density Function;

Fig. 5     a SCDF of a band-limited noise free signal;

Fig. 6     a SCDF of a band-limited noisy signal;

Fig. 7     a principle of OSNR estimation;

Fig. 8     a timing diagram;

Fig. 9     a band-limited carrier impulse;

Fig.     10 an optical implementation;

Fig. 11     a simulation set-up;

Fig. 12     a Cyclic Autocorrerelation Funktion diagram of a simulation;

Fig. 13     a Spectral Correlation Densitiy diagram of a simulation; and

Fig. 14     a diagram of OSNR estimation.

Detailed description

In the following description the details of an embodiment of the method as well as an implementation and a simulation of the method are explained.

Cyclostationary processes are random processes with probabilistic parameters, such as the autocorrelation function (ACF) that vary periodically with time. Signals that have undergone periodic transformations such as sampling, modulation, or multiplexing, can be modelled as cyclostationary processes as described in the above-mentioned reference 6.

Generally, a continuous-time second-order random process $\underline{x}(t)$

$$\underline{x}(t) = \{x_i(t),\, t \in (-\infty, \infty)\}$$

$$(1)$$

is represented by an ensemble of random sample functions or realizations $x_i(t)$.

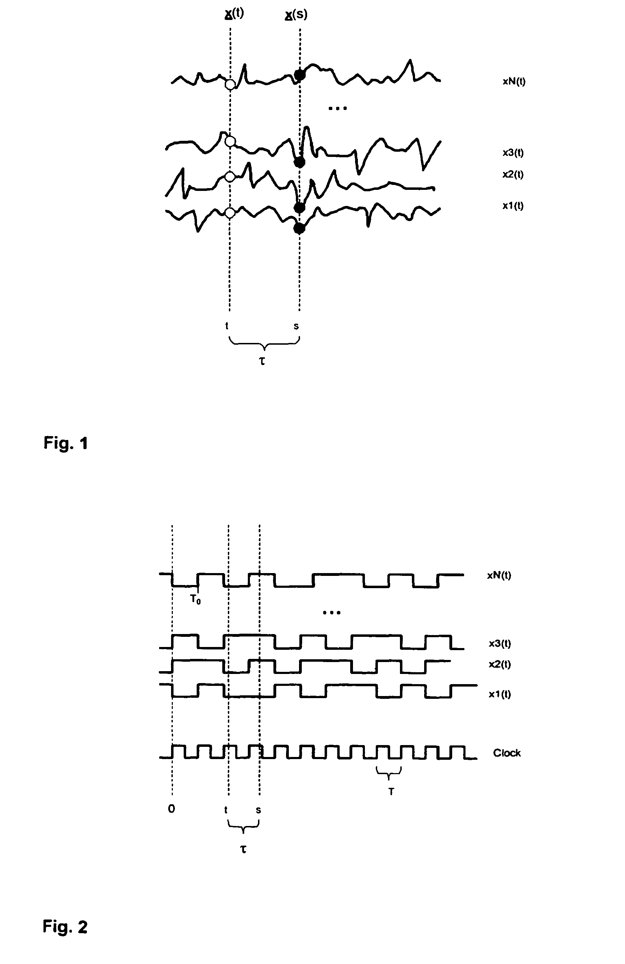

First and second moments $m_x(t)$ and $k_{xx}(t,s)$ are defined as the expected values $E\{\underline{x}(t)\}$ and $E\{\underline{x}(t)\underline{x}^*(s)\}$ which are calculated from the values of all sample functions $x_i(t)$ observed at defined time instants t and s (Fig.1), where $\underline{x}^*(s)$ is the complex conjugate of $\underline{x}(s)$.

$\underline{x}(t)$ is defined to be cyclostationary in the wide sense with period T if and only if its mean m(t) and autocorrelation $k_{xx}(t,s)$ exhibit the periodicity

$$m_x(t) = E\{\underline{x}(t)\} = m_x(t+T), \quad for\ all\ \ t \in (-\infty, \infty)$$

$$(2)$$

$$k_{xx}(t,s) = E\{\underline{x}(t)\underline{x}^*(s)\} = k_{xx}(t+T, s+T), \quad for\ all\ \ t,s \in (-\infty, \infty)$$

$$(3)$$

A typical example for a sample function x(t) of a cyclostationary signal process is a synchronous pulse-amplitude-modulated (PAM) signal

$$x(t) = \sum_{n=-\infty}^{\infty} a_n p(t - nT)$$

$$(4)$$

with symbol period T, and a deterministic carrier pulse p(t) which is modulated by a random sequence of amplitude values $\{a_n\}$, where $\{a_n\}$ is wide-sense stationary. The definition in (3) is also valid when the $a_n$ are complex numbers and/or the carrier pulse is a complex signal. n is an integer number 1,2,...

This is now discussed in connection with an example of an ideal binary data signal. The differences between a wide sense stationary (WSS) process and a synchronous cyclostationary (CS) process are illustrated in Figures 1 and 2.

Fig.1 shows the ensemble of sample functions of a typical WSS noise process, which is observed at two time instants s and t. With a WSS process, the first and second order moments are independent of the start t of the measurement: m(t) is constant and $k_{xx}(t,s)$ depends only on the time difference $\tau = s - t$.

In Fig. 2 the carrier pulse p(t) is a rectangular pulse with width T, where T is the clock period, i.e. the bits are changing at fixed points in time nT.

Under the assumption that successive bits are uncorrelated, the correlation $k_{xx}(t,s)$ is non-zero only if t and s both lie in the same clock interval (nT,(n+1)T]. In addition, the autocorrelation function depends not only on the time difference $\tau = t-s$, but also on the position of t relative to the edge of the clock.

For t directly after the rising edge, $k_{xx}(t,\tau)$ is non-zero for $\tau > 0$, if t is close to the end of the clock interval, $k_{xx}(t,\tau)$ will be non-zero for negative values of $\tau$.

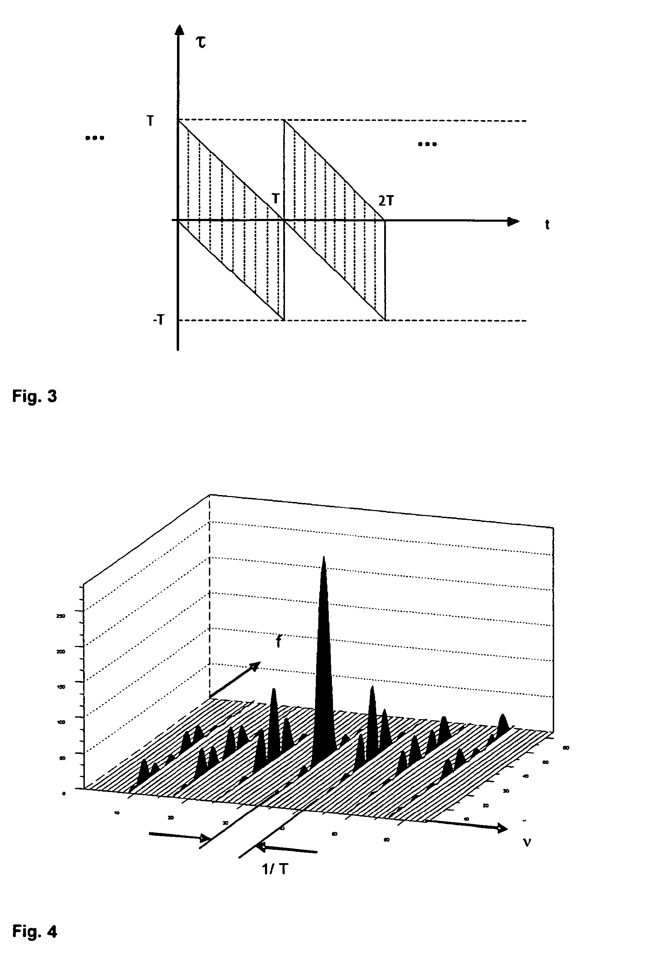

The shaded periodic pattern in Fig. 3 is the area in the $t, \tau$ plane where is $k_{xx}(t,\tau)$ is non-zero.

The Spectral Correlation Density Function $K_{xx}(f,v)$ is defined as the 2D-Fourier transform of $k_{xx}(t,\tau)$

$$K_{xx}(f,v) = \iint k_{xx}(t,\tau) * e^{-j2\pi ft} * e^{-j2\pi vt} dt\, d\tau$$

$$(5)$$

Due to the periodicity of $k_{xx}(t,\tau)$, the Spectral Correlation Density Function $K_{xx}(f,v)$ exists only at discrete values of

$$v = n / T ; \quad (n = -\infty ,... \infty )$$

$$(6)$$

while it is continuous in frequency f.

This characteristic behaviour of the Spectral Correlation Density Function (SCDF) can also be observed when the carrier pulse p(t) is not an ideal rectangle. However, the shape of the slices will be different when the pulse shape is changed.

Under fairly broad assumptions, namely

    1. Signal and noise are uncorrelated
    2. The noise is a wide-sense stationary process
    3. The amplitudes values $a_n$ of successive symbols are uncorrelated

it can be shown that the SCDF $K_{xx}(f,v)$ of a synchronous, cyclostationary process is given by

$$K_{xx}(f,\upsilon) = P^{*}(f) * P(\upsilon - f); \quad \nu = n/T; \quad n = -\infty ... +\infty$$

$$(7)$$

where P(f) is the Fourier-Transform of the carrier pulse p(t).

The following properties of the SCDF are relevant for communications:

1. Cyclic ACF and SCDF are related via 2D Fourier Transform.
2. Due to the periodicity of the cyclic autocorrelation function, the SCDF of cyclostationary processes exhibits characteristic discrete side lobes at frequencies $\nu_n$ n/T (n=1,2,...)
3. The central slice is the normal one-dimensional power spectral density of the signal plus noise.
4. The side-lobes of the SCDF are not affected by additive stationary noise.
5. The type of modulation can be estimated by processing the SCDF using some kind of pattern recognition method.
6. The SCDF contains phase and frequency information related to timing parameters in modulated signals.

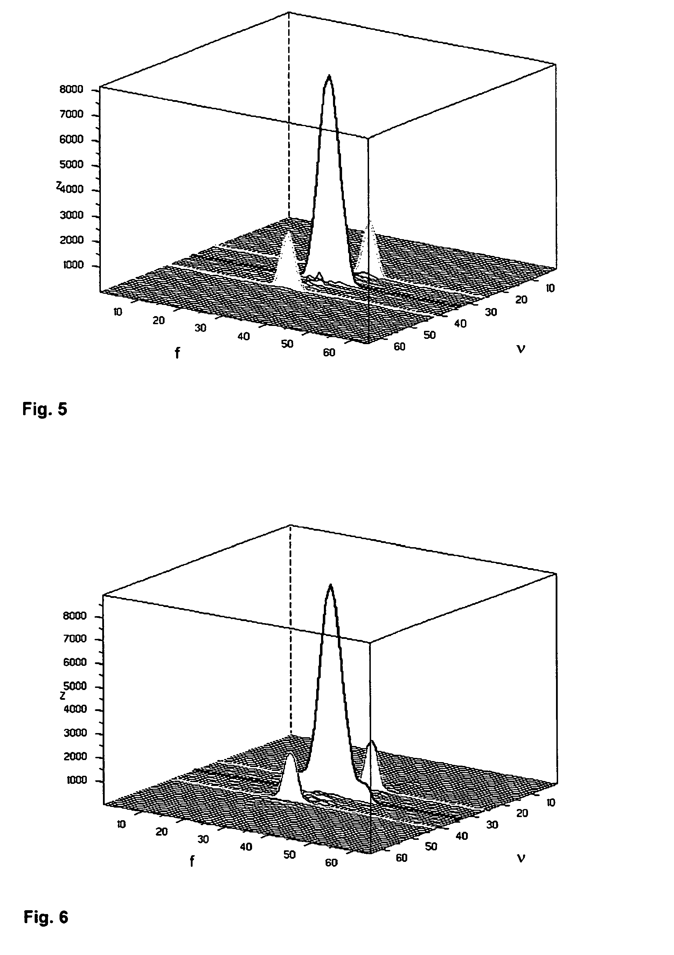

The OSNR estimation presented here is only based on the fact that additive noise is only contributing to the central slice (see Figures 5 and 6).

Fig. 5 shows the SCDF of a PAM signal as defined in (4) with a band-limited carrier pulse p(t). Only the side lobes at v=±1/T are visible, since the term $P^{*}(f)*P(\nu\text{-}f)$ in (7) almost vanishes for larger values of $\nu$ due to the limited bandwidth of the carrier pulse p(t).

Fig. 6 shows the SCDF of the same PAM signal with additive noise. The channel bandwidth was chosen larger than the signal bandwidth in order to visualize the noise contribution to the main lobe. In this case, it would still be possible to measure the level of the noise floor with a normal spectral analyser. The area under the side lobes is proportional to the power of S the signal alone, while the area under the main lobe represents the power S+N of signal plus noise. Therefore, the SNR can be calculated if the proportionality factor a is known. For a given modulation format, the factor can be determined either theoretically from (7) or through a single SCDF measurement with a noise-free signal.

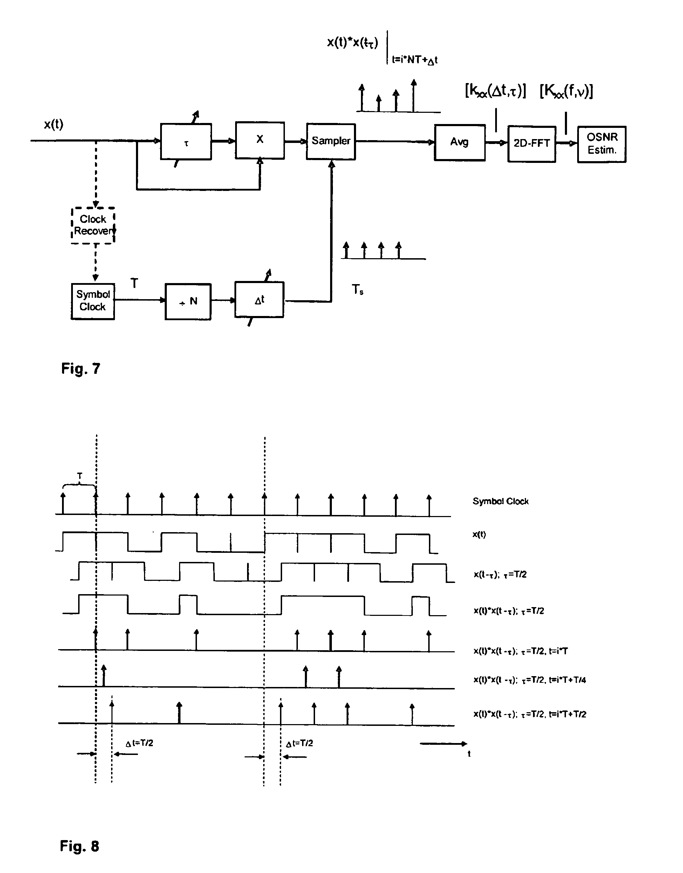

The technical realization is based on the assumption that the random process x(t) is ergodic, i.e. the ensemble averages (as shown in Figs. 1 and 2) can be replaced by averaging over a large number of successive observations of a single sample function x(t).The principle of a OSNR estimation is shown in Fig. 7:

The received signal x(t) is multiplied with a time-delayed version of itself and the product $x(t) * x(t - \tau)$ is sampled at instants $t_i = i * N * T + \Delta t$ where N*T is an integer multiple of the symbol clock of the data signal and $\Delta t$ is an adjustable delay of the sampling clock relative to the rising edge of the symbol clock (Fig. 8)

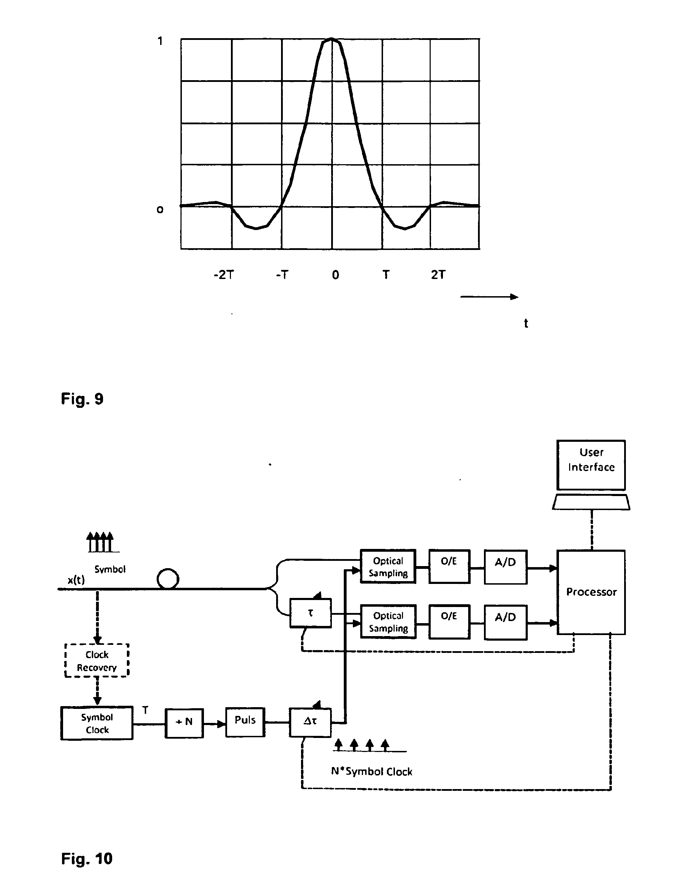

If the symbol clock is not readily available, it can be recovered from the input signal x(t) using state-of-the art clock recovery circuits. For each combination of $\tau$ and $\Delta t$, the average over a large number of samples is stored as an element of the correlation matrix $[k_{xx}(\Delta t, \tau)]$. Taking the 2D Fourier transform of $[k_{xx}(\Delta t, \tau)]$ yields the matrix $[K_{xx}(f,\nu)]$, the elements of which are samples of the spectral correlation density function SCDF. The increments of $\tau$ and $\Delta t$ are a fraction 1/M of the symbol duration; practical values for M are e.g. 4, 8 or 16. The range of $\tau$ and $\Delta t$ should be larger than the total width of the carrier pulse s(t), practical values are 4T...8T (see Fig. 9 for a typical band-limited carrier pulse). Preferrably, the dimensions of $[k_{xx}(\Delta t, \tau)]$ should be a power of two, to enable a 2D Fast Fourier Transform. As an example, M=4 and a range of 4T for $\tau$ and $\Delta t$ would result in 16x16 matrices for $[k_{xx}(\Delta t, \tau)]$ and $[K_{xx}(f,\nu)]$.

There are several ways to estimate the SNR from characteristic features of the SCDF:

1. The area under the side lobes is proportional to the power P of the signal alone, while the area under the main lobe represents the power P+N of signal plus noise.
Therefore, the OSNR can be calculated if the proportionality factor a is known. For a given modulation format, the factor can be determined either theoretically from eq. (7) or through a single SCDF measurement with a noise-free signal.

2. A similar approach uses simply the height of the main lobe and the side lobes instead of the respective areas. Of course, this would require a different proportionality factor.

If the modulation format of the signal x(t) is not known $\alpha$-priori, the factor may be determined from the SCDF using automatic pattern recognition methods by processing characteristic features of the spectral correlation density function (SCDF), e.g. ratio of the peak heights, shape of central peak and side lobes, etc..

It is also possible to use automatic pattern recognition to identify the presence of other impairments of the signal x(t) such as Differential Group Delay, Chromatic Dispersion, etc., by processing characteristic features of the SCDF, in order to compensate the impact of these impairments on the SNR estimate.

Implementation Alternatives for OSNR measurements are

1. Use a fast optical sampling oscilloscope with a sampling rate of M/T and store the trace for off-line processing. This approach does not require any specific opto-electronic components other than the optical sampling scope. The OSNR estimation is performed by a dedicated software application running either on the embedded processor of the oscilloscope or on an external workstation. All delay operations and multiplications are performed by the processor, prior to the calculation of the CACF, SCDF and the OSNR estimate.

Disadvantage: For a sufficient resolution of the SCDF, the number M of samples per symbol must be $\geq 4$; therefore this approach is not suitable for symbol rates >20G symbols/s due to limitations of today's sampling devices and A/D converters.

2. Use optical delay and optical gating functions with a sampling rate of 1/NT to determine the correlation matrix $[k_{xx}(\Delta t, \tau)]$. (Fig.10).

The noisy optical signal x(t) is separated into two paths by a usual optical splitter. The signal on the first path is delayed by an adjustable delay $\tau$. The two signals are fed into optical sampling gates and, which are controlled by narrow gating pulses with period $T_G=N*T$ which may be generated either locally or derived from the incoming signal x(t) by a pulse generator as shown in Fig. 10.

The gating pulses are synchronized with the symbol clock and can be shifted by a defined delay $\Delta t$ relative to the rising edge of the symbol clock. The adjustable delays $\tau$ and $\Delta t$ are controlled by a processor, which is connected with a user interface. The increments of $\tau$ and $\Delta t$ should be $\leq T/4$.

The optical samples are converted into electrical pulses with an O/E converter and digitized with an A/D converter. For each combination of $\Delta t$ and $\tau$, the processor calculates an element of the correlation matrix $[k_{xx}(\Delta t, \tau)]$ by averaging over a large number of sample pairs $x(t_i)$ and $x(t_i-\tau)$, where $t_i=i*N*T+\Delta t$.

The calculation of the Spectral Correlation Density Function and the OSNR estimation procedure are the same as described above.

This approach has the advantage, that the use of optical delay elements avoids the high sampling rates required for the first approach and allows the use of high-resolution A/D converters due to lower sampling rate.

Due to need for dedicated opto-electronic hardware which is controlled by a processor, this approach is preferrably implemented either as a plug-in module for a modular test system or as a stand-alone instrument with its own user interface.

There are other options for optical sampling, e.g. the combination of optical gate and O/E converter may be replaced by a non-linear optical element such as a Two-Photon Absorption Avalance Photodiode.

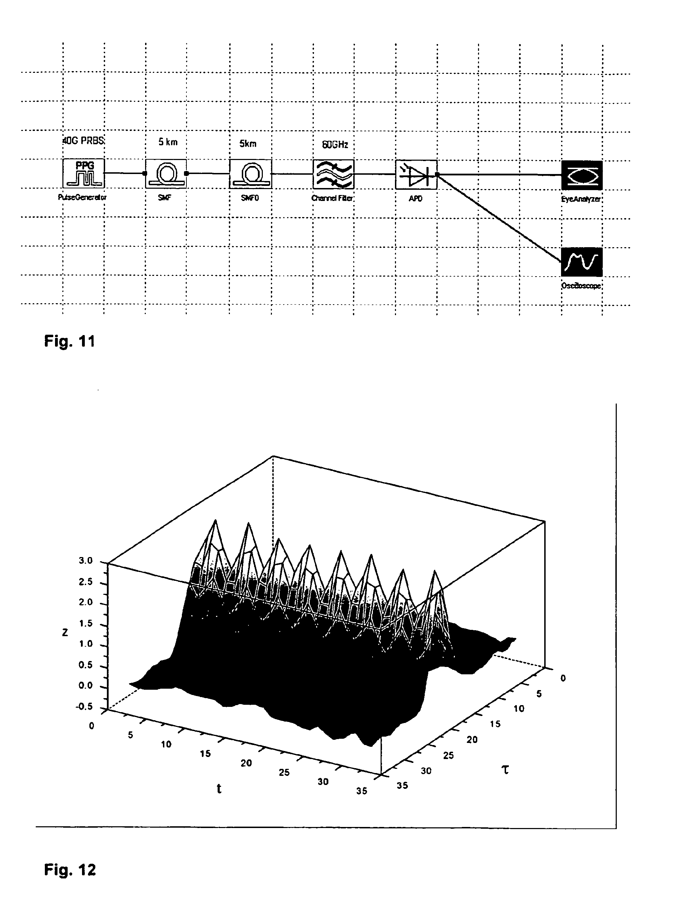

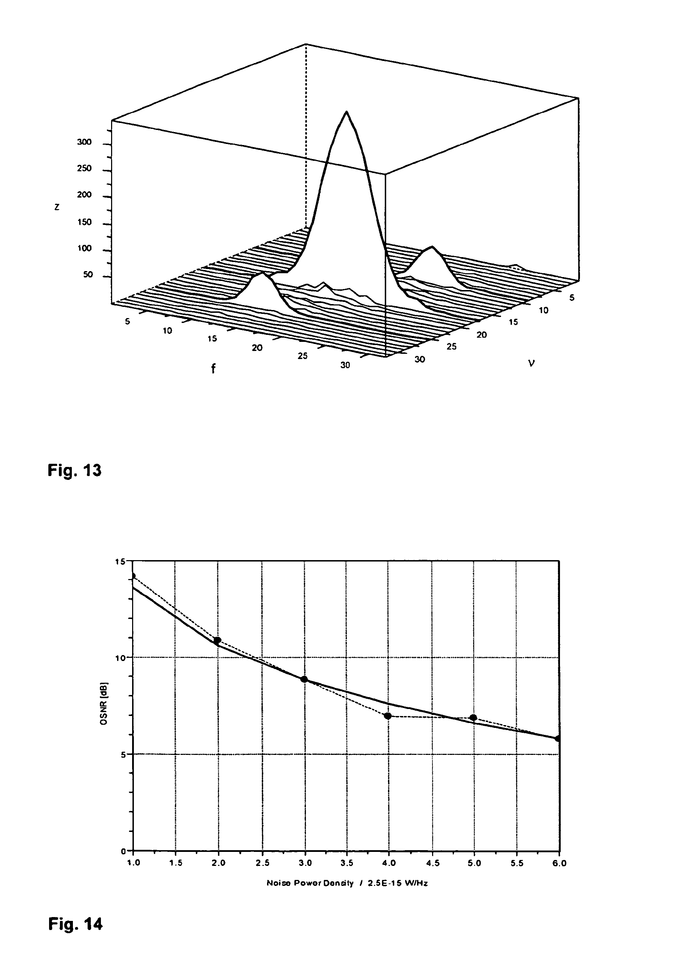

Figures 12 and 13 show the Cyclic Autocorrelation Function and the Spectral Correlation Density Function for the simple example shown in the simulation setup of Fig. 11 and Fig. 14 shows the good match between estimation and theory, in particular for lower OSNR values.

In this example, a 40G Pseudo-Random Binary Sequence (PRBS) is transmitted over 10km of dispersion-compensated single mode fiber. The channel filter has a passband of 60GHz and the noise power density in the channel is varied from 2.5...15 E-15 W/Hz. The carrier pulse is a raised cosine pulse. The signal after the photo detector is sampled with a rate 4/T and $\tau$ and $\Delta t$ were varied between -4T and 4T which results in 32x32 matrices for $[k_{xx}(\Delta t, \tau)]$ and $[K_{xx}(f,\nu)]$.

The method is suitable for a wide range of electrical or optical modulation formats. It is insensitive to linear signal distortions (including Chromatic Dispersion) and I-Q cross talk. There is a good match between the OSNR estimates and the theoretical values, even when signal spectrum and noise spectrum are completely overlapping (Figure 14).

The invention concerns a method and an apparatus for estimating the in-band signal-to-noise SNR in optical channels by processing a spectral correlation density function (SCDF) of a noisy optical or electrical signal $\underline{x}$(t). The method and apparatus are based on the fact that synchronous data signals with a fixed symbol rate 1/T and the channel noise have different correlation properties. The method allows separation of signal and noise components in optical and electrical transmission systems with high spectral efficiency where signal spectrum and noise spectrum are completely overlapping.

## Claims

1. Method for in-service estimation of the signal-to-noise ratio of a noisy optical or electrical signal by the following steps:

   Synchronous sampling of the noisy electrical or optical signal;
   Determining a cyclic autocorrelation function "CACF" of the noisy optical or
   electrical signal:

   Calculating a spectral correlation density function "SCDF" via 2D-Fourier Transform of the cyclic autocorrelation function "CACF";
   Estimating a signal power "P" by extracting characteristic features of the spectral correlation density function "SCDF" and using a calibration factor which is dependent on the modulation format of the optical or electrical signal;
   Estimating a noise power by subtracting the signal power "P" from a total power of the noisy electrical or optical signal.
   Calculating the signal-to-noise ratio SNR=P/N

2. Method according to Claim 1, comprising automatic pattern recognition to identify the calibration factor if the modulation format of the signal (x(t)) is not known a-priori by processing characteristic features of the spectral correlation density function "SCDF".

3. Method according to Claim 1 or Claim 2 comprising automatic pattern recognition to identify the presence other impairments of the signal (x(t)) such as Differential Group Delay, Chromatic Dispersion, etc., by processing characteristic features of the spectral correlation density function "SCDF", in order to compensate the impact of these impairments on the signal-to-noise ratio "SNR" estimate.

4. Apparatus for in-service estimation of the signal-to-noise ratio of a noisy optical or electrical signal comprising:

   means adapted to perform synchronous sampling of the noisy optical or electrical signal;
   means adapted to perform determining of a cyclic autocorrelation function "CACF" of the noisy optical or electrical signal:

   means adapted to perform calculating of a spectral correlation density function "SCDF" via 2D-Fourier Transform of the cyclic autocorrelation function "CACF",
   means adapted to perform estimating of a signal power "P" by extracting characteristic features of the spectral correlation density function "SCDF" and using a calibration factor which is dependent on the modulation format of the optical or
   electrical signal;
   means adapted to perform estimating of a noise power by subtracting the signal power "P" from a total power of the noisy electrical or optical signal.
   means adapted to calculating the SNR.

5. Apparatus according to Claim 4, comprising means adapted to perform automatic pattern recognition to identify the calibration factor if the modulation format of the signal (x(t)) is not known a-priori by processing characteristic features of the spectral correlation density function "SCDF".

6. Apparatus according to Claim 4 or Claim 5, comprising means adapted to perform automatic pattern recognition to identify the presence other impairments of the signal (x(t)) such as Differential Group Delay, Chromatic Dispersion, etc., by processing characteristic features of the spectral correlation density function "SCDF", in order to compensate the impact of these impairments on the signal-to-noise ratio "SNR" estimate.

## Patentansprüche

1. Verfahren zur In-Service-Abschätzung des Signal-Rausch-Verhältnisses eines verrauschten optischen oder elektrischen Signals mit den folgenden Schritten:

   Synchrones Abtasten des verrauschten optischen oder elektrischen Signals;

Bestimmen einer zyklischen Autokorrelationsfunktion "CACF" des verrauschten optischen oder elektrischen Signals;

Berechnen einer spektralen Korrelationsdichtefunktion "SCDF" über 2D-Fourier-Transformation der zyklischen Autokorrelationsfunktion "CACF";

Einschätzen einer Signalstärke "P" durch Extrahieren von charakteristischen Merkmalen der spektralen Korrelationsdichtefunktion "SCDF" und

unter Verwendung eines Kalibrierungsfaktors, der abhängig ist vom Modulationsformat des optischen oder elektrischen Signals;

Abschätzen einer Rauschstärke durch Substrahieren der Signalstärke "P" von einer Gesamtsignalstärke des verrauschten optischen oder elektrischen Signals;

Berechnen des Signal-Rausch-Verhältnisses SNR=P/N.

2. Verfahren nach Anspruch 1, enthaltend eine automatische Mustererkennung zum Bestimmen des Kalibrierungsfaktors, falls das Modulationsformat des Signals (x(t)) nicht a-priory durch Verarbeiten von charakteristischen Merkmalen der spektralen Korrelationsdichtefunktion "SCDF" bekannt ist.

3. Verfahren nach Anspruch 1 oder 2, enthaltend eine automatische Mustererkennung zum Bestimmen des Vorhandenseins anderer Beeinträchtigungen des Signals (x(t)), wie beispielsweise differenzieller Gruppenlaufzeit, chromatischer Dispersion, usw., durch Verarbeiten von charakteristischen Merkmalen der spektralen Korrelationsdichtefunktion "SCDF", um die Auswirkungen dieser Beeinträchtigungen auf das Signal-Rausch-Verhältnis "SNR" auszugleichen.

4. Vorrichtung zur In-Service-Abschätzung des Signal-Rausch-Verhältnisses eines verrauschten optischen oder elektrischen Signals, enthaltend:

Mittel, die dazu ausgelegt sind, eine synchrone Abtastung des verrauschten optischen oder elektrischen Signals durchzuführen;

Mittel, die dazu ausgelegt sind, eine Bestimmung einer zyklischen Autokorrelationsfunktion "CACF" des verrauschten optischen oder elektrischen Signals vorzunehmen;

Mittel, die dazu ausgelegt sind, eine Berechnung einer spektralen korrelationsdichte Funktion "SCDF" über D-Fourier-Transformation "CACF" auszuführen;

Mittel die dazu ausgelegt sind, eine Einschätzung einer Signalstärke "P" durch Extrahieren von charakteristischen Merkmalen der spektralen Korrelationsdichtefunktion "SCDF" und unter Verwendung eines Kalibrierungsfaktors, der abhängig ist vom Modulationsformat des optischen oder elektrischen Signals, zu verrichten;

Mittel, die dazu ausgelegt sind, eine Abschätzung einer Rauschstärke durch Substrahieren der Signalstärke "P" von einer Gesamtsignalstärke des verrauschten optischen oder elektrischen Signals zu vollziehen;

Mittel, die dazu ausgelegt sind, den "SNR" zu berechnen.

5. Vorrichtung nach Anspruch 4, aufweisend Mittel, die dazu ausgelegt sind, eine automatische Mustererkennung zum Bestimmen des Kalibrierungsfaktors vorzunehmen, falls das Modulationsformat des Signals (x(t)) nicht a-priory durch Verarbeiten von charakteristischen Merkmalen der spektralen Korrelationsdichtefunktion "SCDF" bekannt ist.

6. Vorrichtung nach Anspruch 4 oder 5, aufweisend Mittel, die dazu ausgelegt sind, eine automatische Mustererkennung zum Bestimmen des Vorhandenenseins anderer Beeinträchtigungen des Signals (x(t)), wie beispielsweise differenzieller Gruppenlaufzeit, chromatischer Dispersion, usw., durch Verarbeiten von charakteristischen Merkmalen der spektralen Korrelationsdichtefunktion "SCDF" durchzuführen, um die Auswirkungen dieser Beeinträchtigungen auf das Signal-Rausch-Verhältnis "SNR" auszugleichen.

**Revendications**

1. Procédé d'estimation en service du rapport signal sur bruit d'un signal optique ou électrique bruité, comprenant les étapes suivantes :

échantillonnage synchrone du signal optique ou électrique bruité ;

détermination d'une fonction d'autocorrélation cyclique "CACF" du signal optique ou électrique bruité ;

calcul d'une fonction de densité de corrélation spectrale "SCDF" par transformation de Fourier 2D de la fonction d'autocorrélation cyclique "CACF" ;

estimation d'une puissance de signal "P" par extraction d'éléments caractéristiques de la fonction de densité de corrélation spectrale "SCDF" et utilisation d'un facteur d'étalonnage qui dépend du format de modulation du signal optique ou électrique ;

estimation d'une puissance de bruit par soustraction de la puissance de signal "P" d'une puissance totale du signal optique ou électrique bruité ;

calcul du rapport signal sur bruit SNR = P/N.

2. Procédé selon la revendication 1, comprenant une reconnaissance automatique de motifs pour identifier le facteur d'étalonnage si le format de modulation du signal (x(t)) n'est pas connu a priori par traitement des éléments caractéristiques de la fonction de densité de corrélation spectrale "SCDF".

3. Procédé selon la revendication 1 ou la revendication 2, comprenant une reconnaissance automatique de motifs pour identifier la présence d'autres altérations du signal (x(t)) telles que retard de groupe différentiel, dispersion chromatique, etc. par traitement des éléments caractéristiques de la fonction de densité de corrélation spectrale "SCDF" pour compenser l'impact de ces altérations sur l'estimation du rapport signal sur bruit "SNR".

4. Appareil pour l'estimation en service du rapport signal sur bruit d'un signal optique ou électrique bruité, comprenant :

des moyens aptes à effectuer un échantillonnage synchrone du signal optique ou électrique bruité ;

des moyens aptes à effectuer une détermination d'une fonction d'autocorrélation cyclique "CACF" du signal optique ou électrique bruité ;

des moyens aptes à effectuer un calcul d'une fonction de densité de corrélation spectrale "SCDF" par transformation de Fourier 2D de la fonction d'autocorrélation cyclique "CACF" ;

des moyens aptes à effectuer une estimation d'une puissance de signal "P" par extraction d'éléments caractéristiques de la fonction de densité de corrélation spectrale "SCDF" et utilisation d'un facteur d'étalonnage qui dépend du format de modulation du signal optique ou électrique ;

des moyens aptes à effectuer une estimation d'une puissance de bruit par soustraction de la puissance de signal "P" d'une puissance totale du signal optique ou électrique bruité ;

des moyens aptes à calculer le rapport signal sur bruit SNR = P/N.

5. Appareil selon la revendication 4, comprenant des moyens aptes à effectuer une reconnaissance automatique de motifs pour identifier le facteur d'étalonnage si le format de modulation du signal (x(t)) n'est pas connu a priori par traitement des éléments caractéristiques de la fonction de densité de corrélation spectrale "SCDF".

6. Appareil selon la revendication 4 ou la revendication 5, comprenant des moyens aptes à effectuer une reconnaissance automatique de motifs pour identifier la présence d'autres altérations du signal (x(t)) telles que retard de groupe différentiel, dispersion chromatique, etc. par traitement des éléments caractéristiques de la fonction de densité de corrélation spectrale "SCDF" pour compenser l'impact de ces altérations sur l'estimation du rapport signal sur bruit "SNR".

x̱(t)   x̱(s)

xN(t)

. . .

x3(t)

x2(t)

x1(t)

t       s

τ

**Fig. 1**

xN(t)

T₀

. . .

x3(t)

x2(t)

x1(t)

Clock

0       t   s

τ

T

**Fig. 2**

**Fig. 3**

**Fig. 4**

Fig. 5

Fig. 6

$x(t)^*x(t_\tau) \Big|_{t=i^*NT+\Delta t}$

$[k_{xx}(\Delta t, \tau)]$   $[K_{xx}(f, \nu)]$

x(t)

| τ | X | Sampler | Avg | 2D-FFT | OSNR Estim. |

Clock Recovery

Symbol Clock

T

÷ N

Δt

T$_s$

**Fig. 7**

T

Symbol Clock

x(t)

$x(t-\tau); \ \tau = T/2$

$x(t)^*x(t-\tau); \ \tau = T/2$

$x(t)^*x(t-\tau); \ \tau = T/2, \ t = i^*T$

$x(t)^*x(t-\tau); \ \tau = T/2, \ t = i^*T+T/4$

$x(t)^*x(t-\tau); \ \tau = T/2, \ t = i^*T+T/2$

Δt=T/2

Δt=T/2

t

**Fig. 8**

**Fig. 9**

**Fig. 10**

**Fig. 11**

**Fig. 12**

**Fig. 13**

**Fig. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7283744 B

### Non-patent literature cited in the description

- **C. CHAN et al.** Optical Performance Monitoring. Elsevier, 2010
- *ITU-T Rec. G.697: Optical monitoring for DWDM systems,* November 2009
- **W. MOENCH ; J. LARIKOVA.** Measuring the Optical Signal-to-Noise Ratio in Agile Optical Networks. *OFC,* 2007
- **M. RASZTOVITS-WIECH ; M. DANNER ; W. R. LEEB.** Optical signal-to-noise measurement in WDM networks using polarization extinction. *ECOC,* 1998, 549
- **GARDNER, W.A. ; FRANKS, L.E.** Characterization of Cyclostationary Random Signal Processes. *IEEE Transactions on Information Theory,* January 1975, vol. IT-21 (1